# EUROPEAN PATENT SPECIFICATION

(11) **EP 1 775 207 B1**
(45) Date of publication and mention of the grant of the patent: **28.07.2010**
(21) Application number: 06021652.0
(22) Date of filing: 16.10.2006
(51) Int. Cl.: B62K 11/04, F02B 61/02, B62K 11/06, F01N 3/22, F02M 69/04

(54) **Straddle-type vehicle**
Im Grätschsitz zu benutzendes Fahrzeug
Véhicule de type à enfourcher

(30) Priority: 17.10.2005 JP 2005302070
(43) Date of publication of application: 18.04.2007
(73) Proprietor: Yamaha Hatsudoki Kabushiki Kaisha, Iwata-shi, Shizuoka-ken 438-8501 (JP)
(72) Inventor: Miyabe, Toshimasa, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 319 591
- EP-A- 1 526 024
- EP-A2- 1 186 526
- FR-A- 2 664 227
- JP-A- 11 336 538
- JP-A- 2002 266 724
- US-A1- 2004 171 449
- US-A1- 2006 066 092

## Description

The present invention relates to a straddle-type vehicle, in particular a motorcycle, having a stride part for facilitating a stride of a rider at the time of loading and unloading between a head pipe and a seat.

In recent motorcycles, a method for controlling fuel supply by a fuel injection valve according to a run state is being adopted from the standpoint of making improvements etc. in properties of exhaust gas, fuel efficiency or engine output. In the case of arranging such a fuel injection valve, a structure in which an intake passage connected to a cylinder head is extended to the front of a vehicle and also is connected to an air cleaner and the fuel injection valve is substantially perpendicularly stood and arranged in the downstream end of the intake passage is adopted in, for example, Patent Reference 1.

Patent Reference 1: JP-A-2002-266724

By the way, in the conventional motorcycle, a structure in which a fuel injection valve is stood and arranged in the downstream end of an intake passage extending from a cylinder head to the front of the vehicle is adopted. As a result of this, an injection direction of fuel of the fuel injection valve is oriented to a ceiling wall of an intake port and the fuel cannot be injected toward the essentially desirable umbrella back of an intake valve and there is fear that engine performance cannot be offered sufficiently.

Also, when the fuel injection valve described above is stood and arranged in a motorcycle comprising a backward descending panel member for facilitating loading and unloading of a rider, the need to arrange the panel member in a high position arises in order to avoid interference with the fuel injection valve and it is concerned about a problem of losing the capability of loading and unloading.

The document US 2004/171449 A1 discloses a motorcycle comprising a body cover formed between a head pipe and a seat. An engine is mounted in a lower portion of the body cover. An inlet pipe is connected to a cylinder head of a cylinder of the engine and extends backwards on the vehicle in the lower side of the body cover. A throttle valve is arranged in the vicinity of an engine connection port of the inlet pipe.

The invention has been implemented in view of the conventional circumstances described above, and an object of the invention is to provide a motorcycle capable of arranging a fuel injection valve so as to be oriented to the umbrella back of an intake valve and thus improving engine performance.

The objective is solved by the features of claim 1.

According to a preferred embodiment, the straddle-type vehicle further comprises a frame member, which is connected to the head pipe and extends toward a lower portion of the seat in a backward descending state, wherein the panel member is formed so as to cover the upper side, the left and right sides of said frame member is in a backward descending state and the fuel injection valve is disposed so as to be located inside the space surrounded by the frame member, the throttle body and the cylinder head when viewed from the side of the vehicle.

Therein, the frame member may have left and right side pipes in at least a part between the head pipe and the seat and the fuel injection valve may be arranged between the left and right side pipes when viewed from the above of the vehicle.

Moreover, is it preferred if the frame member has one main pipe, which is connected to the head pipe and extends to a backward oblique lower portion and left and right side pipes, which are connected to the back end of said main pipe and extend to a lower portion of the seat while expanding in a vehicle width direction and the fuel injection valve is arranged between the left and right side pipes in the vicinity of a connection part between said side pipes and the main pipe when viewed from the above of the vehicle.

According to another preferred embodiment, a fuel supply hose is connected to the fuel injection valve so as to incline to the back of the vehicle with respect to an axis line of said fuel injection valve and said fuel supply hose extends backward in the lower side of the panel member.

Therein, the fuel supply hose may have the portion overlapping with the frame member when viewed from the side of the vehicle.

In addition, the intake passage may extend to the back of the vehicle so as to pass between the left and right side pipes.

Further, the fuel supply hose may be connected to the fuel injection valve extends backward over the upper side of the throttle body.

According to yet another preferred embodiment, the straddle-type vehicle may further comprise a frame member which is connected to the head pipe and extends to a lower portion of the seat so as to be displaced to one side of a vehicle width direction in a backward descending state, wherein the panel member is formed so as to cover the upper side, the left and right sides of said frame member and the fuel injection valve is located in the other side of the frame member when viewed from the above of the vehicle and is located inside space surrounded by the panel member, the throttle body and the cylinder head when viewed from the side of the vehicle.

Therein, it is further preferable if the fuel injection valve is disposed so as to overlap with the frame member when viewed from the side of the vehicle.

According to still another preferred embodiment, the straddle-type vehicle may further comprise a secondary air supply system for supplying secondary air to an exhaust system of the engine, characterized in that said secondary air supply system comprises a reed valve opened and closed by pulsation of the exhaust system and a resonator for attenuating a predetermined resonance frequency and said resonator is arranged in the lower side of the throttle body.

In the following, the present invention is explained in greater detail with respect to several embodiments thereof in conjunction with the accompanying drawings, wherein:
- Fig. 1: is a side view of a motorcycle according to a first embodiment,
- Fig. 2: is a side view of a frame member of the motorcycle,
- Fig. 3: is a side view of a fuel supply device disposed in the frame member,
- Fig. 4: is a perspective view viewed from the oblique back of the fuel supply device,
- Fig. 5: is a side view of a fuel hose of the fuel supply device,
- Fig. 6: is a plan view of a frame member according to a second embodiment, and
- Fig. 7: is a side view of the frame member.

### Description of the Reference Numerals and Signs:

- 1: MOTORCYCLE
- 3: HEAD PIPE
- 5: ENGINE
- 5c: CYLINDER HEAD
- 7: SEAT
- 8: STEERING SHAFT
- 13: FRAME MEMBER
- 13a: MAIN PIPE
- 13b: SIDE PIPE
- 19c: LEG SHIELD (PANEL MEMBER)
- 22: FUEL TANK
- 33: EXHAUST TUBE
- 37: INTAKE TUBE (INTAKE PASSAGE)
- 38: THROTTLE BODY
- 40: AIR CLEANER
- 42: SECONDARY AIR SUPPLY HOSE
- 43: RESONATOR
- 45: FUEL INJECTION VALVE
- 46: FUEL HOSE
- 60: FRAME MEMBER

Embodiments will be described below based on the accompanying drawings.

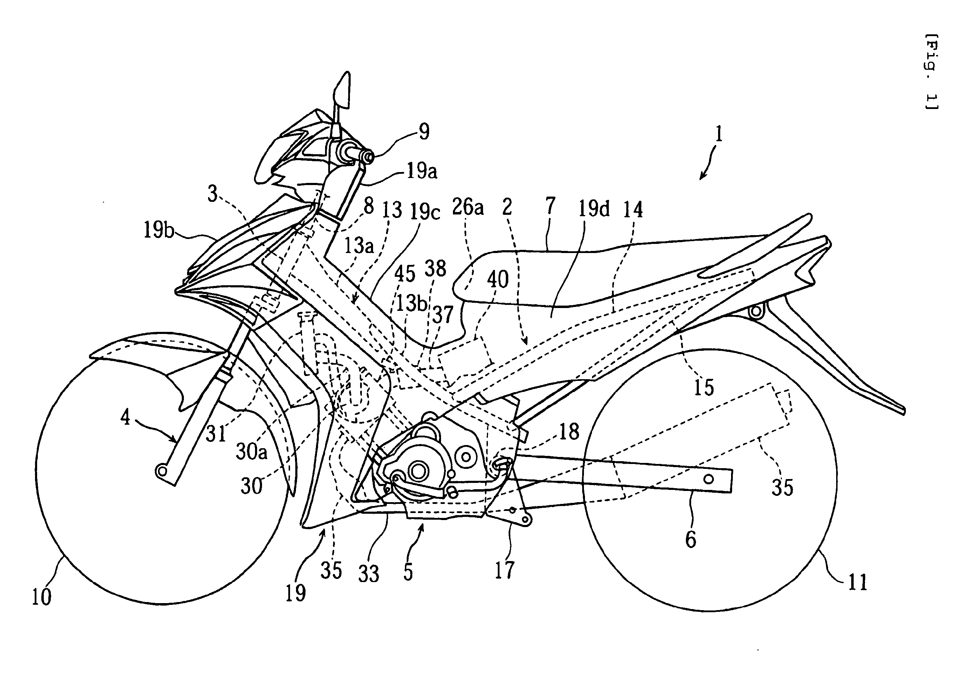

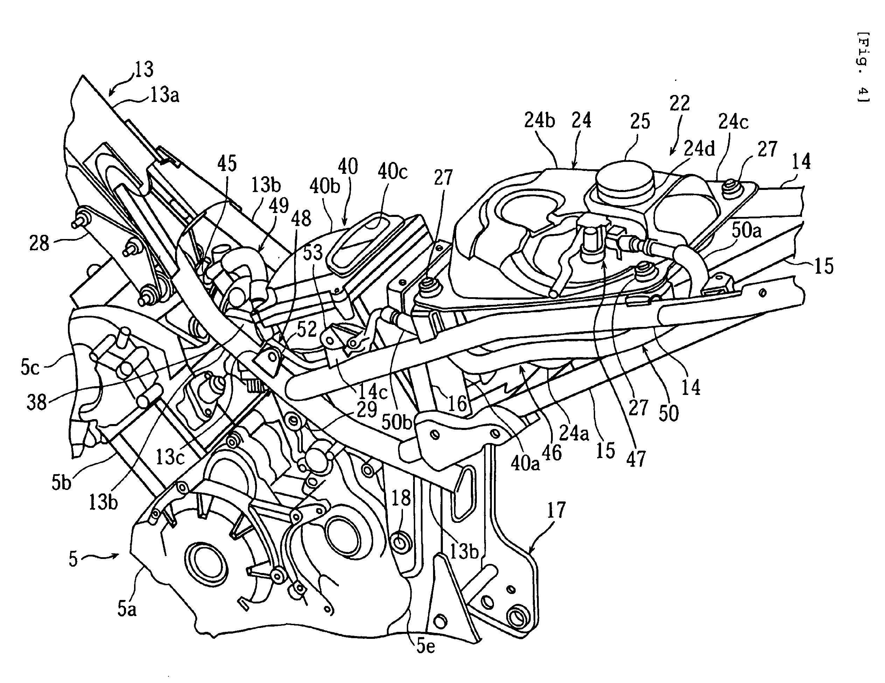

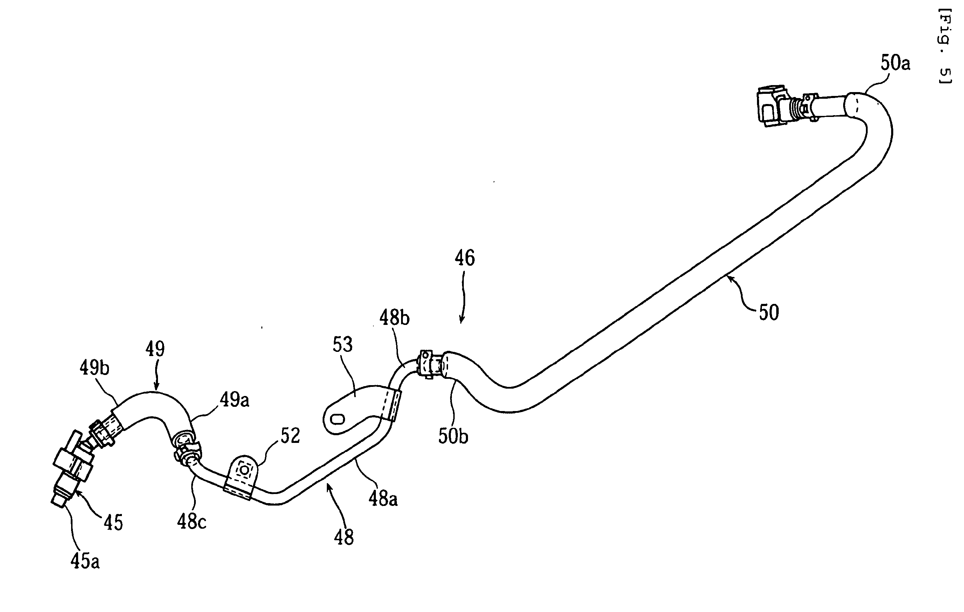

Figs. 1 to 5 are diagrams describing a motorcycle according to a first embodiment. In addition, the term "forward and backward, left and right" shown in the present embodiment means "forward and backward, left and right" of the case of being viewed in a state of sitting on a seat.

In the drawings, numeral 1 shows a motorcycle and this motorcycle comprises a vehicle body frame 2 of an under bone type, a front fork 4 pivoted by a head pipe 3 fixed in the front end of the vehicle body frame 2, an engine 5 suspended and supported in the center of the vehicle body frame 2, a rear arm 6 vertically swingably pivoted in the back side of the engine 5 of the vehicle body frame 2, and a seat 7 for two arranged on the vehicle body frame 2.

A front wheel 10 is axially supported in the lower end of the front fork 4 and a rear wheel 11 is axially supported in the back end of the rear arm 6.

A steering shaft 8 is axially supported in the head pipe 3 through a bearing (not shown). The front fork 4 is fixed in the lower end of this steering shaft 8 and a steering handle 9 is fixed in the upper end.

The vehicle body frame 2 comprises a frame member 13 which is connected to the head pipe 3 and extends toward a lower portion of the seat 7 in a backward descending state.

The frame member 13 has one main pipe 13a which is connected to the head pipe 3 and extends to a backward oblique lower portion of the vehicle, and one pair of left and right side pipes 13b, 13b which are connected to the back end of the main pipe 13a and extend to a backward oblique lower portion so as to be located in a lower portion of the seat 7 while expanding to the outside of a width direction of the vehicle.

An axis line of the main pipe 13a and a center line of the vehicle width direction of the left and right side pipes 13b coincide with a vehicle body center line passing through an axis line of the head pipe 3.

The front ends of left and right seat rails 14, 14 extending in a backward oblique upper direction of the vehicle are connected to the backs of the left and right side pipes 13b. Also, the back ends of the left and right side pipes 13b and the back ends of the seat rails 14 are joined by left and right back stays 15, 15. Further, the fronts of the seat rails 14 and the left and right back stays 15 are mutually joined by left and right longitudinal pipes 16, 16.

A rear arm bracket 17 extending downward is connected to the portion to which the back stays 15 of the back ends of the left and right side pipes 13b are connected. The rear arm 6 is supported in this rear arm bracket 17 by a pivot shaft 18.

The vehicle body frame 2 is covered with a vehicle body cover 19. This vehicle body cover 19 has a handle cover 19a for covering the outer circumference of the steering handle 9, a front cover 19b for covering a front side portion of the head pipe 3, a leg shield 19c (panel member) for covering the upper side, the left and right sides of the frame member 13 between the seat 7 and the head pipe 3, and a side cover 19d for covering the downward circumference of the seat 7.

The leg shield 19c constructs a backward descending stride part which inclines along the frame member 13 in a backward descending state and facilitates a stride of a rider at the time of loading and unloading.

A fuel tank 22 is arranged in a downward portion of the seat 7 of the left and right seat rails 14 and a glove compartment 23 is arranged in the back side of the fuel tank 22. A battery box 26 in which a battery and fuse unit (not shown) is received is arranged in the front side of the fuel tank 22. The battery box 26 is fixed on the left and right seat rails 14. Also, a hinge part 26a for vertically rotatably supporting the seat 7 is integrally formed in a front wall of the battery box 26.

The fuel tank 22 has a structure in which a fuel inlet 24d is formed in an upper wall of a tank body 24 made by mutually bonding flange parts 24c of a lower tank 24a and an upper tank 24b. This fuel inlet 24d is openably blocked by a fuel cap 25. The tank body 24 is elastically supported in the left and right seat rails 14 through elastic bushings 27 attached to each of the corners of the flange parts 24c.

The engine 5 is a water cooling type four-cycle one-cylinder engine mounted with a cylinder axis line A forward tilted. This engine 5 has a general structure in which a cylinder block 5b is coupled to an upper mesh surface of a crankcase 5a in which a crankshaft (not shown) is held in a width direction of the vehicle and a cylinder head 5c is coupled to an upper mesh surface of the cylinder block 5b and further a head cover 5d is attached to the cylinder head 5c. A transmission case part 5e in which a transmission unit (not shown) is held is integrally formed in the back side of the crankcase 5a.

The cylinder head 5c is bolted and fixed to the main pipe 13a through left and right front side suspension brackets 28, and an upper wall of the crankcase 5a is bolted and fixed to the left and right side pipes 13b through an intermediate suspension bracket 29 and further, the lower end of a back side wall of the transmission case part 5e is bolted and fixed to a lower side bracket 17a of the rear arm bracket 17.

A cooling water pump 30 is arranged in a left wall of the cylinder head 5c. This cooling water pump 30 is connected to a radiator 31 arranged in the oblique front of the engine 5 through a cooling water hose 30a.

An exhaust system of the engine 5 has the following structure. An exhaust tube 33 in communication with an exhaust port (not shown) is connected to a front side wall of the cylinder head 5c. This exhaust tube 33 extends downward from the cylinder head 5c and bends backward therefrom and extends backward through a lower portion of the crankcase 5a. A muffler 34 arranged in the right side of the rear wheel 11 is connected to the downstream end of the exhaust tube 33. Also, a catalyst 35 is interposed in the upstream side of the exhaust tube 33.

An intake system of the engine 5 has the following structure. An intake tube 37 in communication with an intake port (not shown) is connected to a back side wall of the cylinder head 5c. This intake tube 37 extends substantially horizontally from the cylinder head 5c to the back of the vehicle and a throttle body 38 into which a throttle valve (not shown) is built is interposed in an intermediate part of the intake tube 37. Also, an air cleaner 40 is connected to the back end of the intake tube 37. This air cleaner 40 is set at a predetermined capacity capable of securing the intake amount at the time of the maximum output of the engine 5.

The air cleaner 40 comprises a cleaner body 40a with a bottomed rectangular parallelepiped shape extending in a vertical direction and a lid member 40b detachably attached to an upper end opening of the cleaner body 40a. The cleaner body 40a is manufactured using a metal mold in which a die cutting direction is a vertical direction (direction of an axis line B). That is, in the cleaner body 40a, a dimension of the upper end opening becomes larger than that of the bottom in a width direction and forward and backward directions of the vehicle.

An air filter (not shown) is arranged inside the cleaner body 40a and the intake tube 37 is connected to a front wall of the cleaner body 40a. An inlet port 40c is formed in a rear surface of the lid member 40b.

The air cleaner 40 is arranged with the axis line B forward tilted so as to become substantially parallel to the cylinder axis line A. The cleaner body 40a is received inside space formed in a connection part between the left and right side pipes 13b, 13b and the left and right seat rails 14, 14, and approximately upper half of the cleaner body 40a protrudes upward from the left and right seat rails 14.

A secondary air supply system of the engine 5 has the following structure. The air cleaner 40 is communicated and connected to a downstream side portion of the catalyst 35 of the exhaust tube 33 by a secondary air supply hose 42 for supplying secondary air to the inside of the exhaust tube 33;

A reed valve (not shown) opened and closed by pulsation of the exhaust system and a resonator 43 for attenuating a predetermined resonance frequency in the upstream side of the reed valve are interposed in the secondary air supply hose 42. The reed valve is arranged in the right side of the cylinder block 5b and the resonator 43 is arranged in a left lower portion of the throttle body 38 and is mounted and fixed in the throttle body 38.

A fuel supply device is disposed in the engine 5. This fuel supply device comprises the fuel tank 22 arranged in the back of the air cleaner 40, a fuel injection valve 45 which is arranged in the front of the air cleaner 40 and is connected to the engine 5, a fuel hose 46 for making connection between the fuel injection valve 45 and the fuel tank 22, and a fuel pump 47 for pressurizing fuel of the inside of the fuel tank 22 and supplying the fuel to the fuel injection valve 45.

The fuel pump 47 is received and arranged inside the fuel tank 22. An inlet (not shown) of the fuel pump 47 is located in the bottom of the tank and an outlet 47b protrudes backward from an upper wall of the tank body 24.

The fuel hose 46 is connected to the outlet 47b of the fuel pump 47 and extends forward through the left side of the fuel tank 22 from the outlet 47b and is connected to the fuel injection valve 45 through the left side of the air cleaner 40, and specifically has the following structure.

The fuel hose 46 comprises a thin diameter part 48 cabled so as to pass through the side of the air cleaner 40, and front side and back side elastic hose parts 49, 50 connected to both ends of the thin diameter part 48.

The thin diameter part 48 is constructed of a metal pipe with an outside diameter of about 8 mmφ folded and formed in a predetermined shape. An inner circumference surface and an outer surface of the metal pipe are respectively coated with predetermined plating treatment. Also, the front side and back side elastic hose parts 49, 50 are constructed of a high-pressure hose having flexibility and an outside diameter about twice that of the thin diameter part 48.

The back side elastic hose part 50 is cabled so as to extend in forward and backward directions along the lower tank 24a of the fuel tank 22 between the left seat rail 14 and back stay 15. An upstream part 50a of the elastic hose part 50 is curved and formed so as to tum from the back side of the tank body 24 to the front side and is connected to the outlet 47b of the fuel pump 47. Also, a downstream part 50b extends forward so as to be located in the front side of the lower tank 24a and extends so as to be located from the lower side of the left seat rail 14 to the upper side and is connected to the thin diameter part 48.

The front side elastic hose part 49 is formed so as to have a generally downward curve and is cabled so as to stride over an upper portion of the throttle body 38 forward and backward and be located upward beyond the left and right side pipes 13b. In the front side elastic hose part 49, an upstream part 49a is connected to the thin diameter part 48 in the back side of the throttle body 38 and the downstream end 49b is connected to the fuel injection valve 45 in the front side of the throttle body 38. This downstream end 49b inclines to the back of the vehicle with respect to an axis line D of the fuel injection valve 45 when viewed from the side of the vehicle. Also, this back inclination portion overlaps with the side pipe 13b when viewed from the side of the vehicle.

The thin diameter part 48 has a straight part 48a arranged so as to pass through the vicinity of a left wall of the cleaner body 40a, a stand part 48b extending from the vicinity of the back edge of the cleaner body 40a in a backward ascending state following the back end of the straight part 48a, and a bend part 48c extending from the vicinity of the front edge of the cleaner body 40a to the inside in a forward ascending state following the front end of the straight part 48a. The front side elastic hose part 49 is connected to the bend part 48c and the back side elastic hose part 50 is connected to the stand part 48b.

A front bracket 52 and a back bracket 53 are respectively fastened to the bend part 48c and the stand part 48b of the thin diameter part 48 by brazing etc. This front bracket 52 is bolted and fixed to a side bracket 13c bonded to an upper surface of the left side pipe 13b and the back bracket 53 is bolted and fixed to a rail bracket 14c bonded to an upper surface of the left seat rail 14.

The thin diameter part 48 is cabled so that the straight part 48a is close to a left wall of the cleaner body 40a in the inside of the left seat rail 14 and becomes parallel to the left wall and the left seat rail 14. Then, the straight part 48a is cabled so as to be close to the left wall in a direction (vehicle width direction) substantially perpendicular to a die cutting direction (vertical direction) of the cleaner body 40a with respect to the left wall.

The fuel injection valve 45 is attached to the downstream end of the intake tube 37 so as to incline in an oblique backward direction. The fuel injection valve 45 is arranged so that an injection port 45a is oriented to the umbrella back of an intake valve (not shown).

The fuel injection valve 45 is arranged so as to be located inside space surrounded by the throttle body 38, the cylinder head 5c and the leg shield 19c, specifically, space of the lower side of the side pipes 13b whose the upper side, the left and right sides are covered with the leg shield 19c when viewed from the side of the vehicle.

Also, the fuel injection valve 45 is arranged between the left and right side pipes 13b in the vicinity of the lower side of a connection part between the left and right side pipes 13b and the main pipe 13a when viewed from the above of the vehicle.

According to the embodiment, the intake tube 37 connected to the forward-tilted cylinder head 5c is extended in a generally horizontal direction backward in the lower side of the leg shield 19c and the fuel injection valve 45 is arranged so as to be located inside space surrounded by the cylinder head 5c, the throttle body 38 and the leg shield 19c, specifically, space of the lower side of the side pipes 13b whose the upper side, the left and right sides are covered with the leg shield 19c when viewed from the side of the vehicle, so that the fuel injection valve 45 can be arranged in a region having sufficient space and the fuel injection valve 45 can be arranged so that the injection port 45a is oriented to the umbrella back of an intake valve and thus engine performance can be improved.

That is, the fuel injection valve 45 can be arranged in empty space formed by the side pipes 13b extending in an oblique upward direction, the cylinder head 5c forward tilted and arranged in a lower portion of the side pipes 13b and the intake tube 37 extending in a generally horizontal direction backward from the cylinder head 5c. As a result of that, the fuel injection valve 45 can be arranged so as to be oriented to the umbrella back of the intake valve without heightening an arrangement position of the leg shield 19c and flexibility for an arrangement layout of the fuel injection valve 45 can be increased while ensuring the loading and unloading capability which is an advantage of a motorcycle comprising a stride part.

In the embodiment, the fuel injection valve 45 is arranged between the left and right side pipes 13b in the vicinity of the lower side of a connection part between the left and right side pipes 13b and the main pipe 13a when viewed from the above of the vehicle, so that the fuel injection valve 45 is located between a rigid forward-tilted cylinder and the portion with high rigidity of the vehicle body and damage caused by external force can be prevented.

In the embodiment, the front side elastic hose part 49 of the fuel hose 46 is connected to the fuel injection valve 45 so as to incline to the back of the vehicle with respect to the axis line D of the fuel injection valve 45 and the lower side of the leg shield 19c is cabled backward, so that protrusion to an upper portion of the front side elastic hose part 49 can be reduced and an arrangement position of the leg shield 19c can be prevented from heightening. Also, the inclination portion of the fuel hose 46 is overlapped with the side pipes 13b when viewed from the side of the vehicle, so that a bend of a fuel injection valve connection portion of the fuel hose 46 can be reduced.

In the embodiment, the intake tube 37 is extended in a generally horizontal direction backward so as to pass between the cylinder head 5c and the left and right side pipes 13b and the front side elastic hose part 49 is cabled so as to stride over the upper side of the throttle body 38 forward and backward, so that the front side elastic hose part 49 can be cabled effectively using empty space of an upper portion of the throttle body 38.

In the embodiment, the resonator 43 is interposed in the secondary air supply hose 42 for supplying secondary air to an exhaust system and the resonator 43 is arranged in the lower side of the throttle body 38, so that the resonator 43 can be arranged using empty space of the lower side of the throttle body 38. That is, when a carburetor having a float chamber is arranged, it is difficult to secure an arrangement place of the resonator in a lower portion of the float chamber and it is necessary to secure the arrangement place in another place and the periphery of an engine can be formed compactly as compared with such carburetor specifications.

According to the embodiment, the portion passing through the vicinity of the side of the air cleaner 40 of the fuel hose 46 for connecting the fuel tank 22 to the fuel injection valve 45 is formed as the thin diameter part 48 with a diameter thinner than that of the front side and back side elastic hose parts 49, 50, so that an increase in a dimension of a vehicle width of the whole vehicle can be avoided without reducing a capacity of the air cleaner 40.

Also, the portion passing through the vicinity of the air cleaner 40 is formed as the thin diameter part 48, so that it is unnecessary to form a recess groove in the cleaner body 40a while arranging the fuel hose 46 so as to be close in a direction intersecting with a die cutting direction of the cleaner body 40a and a decrease in a capacity of the air cleaner 40 can be avoided.

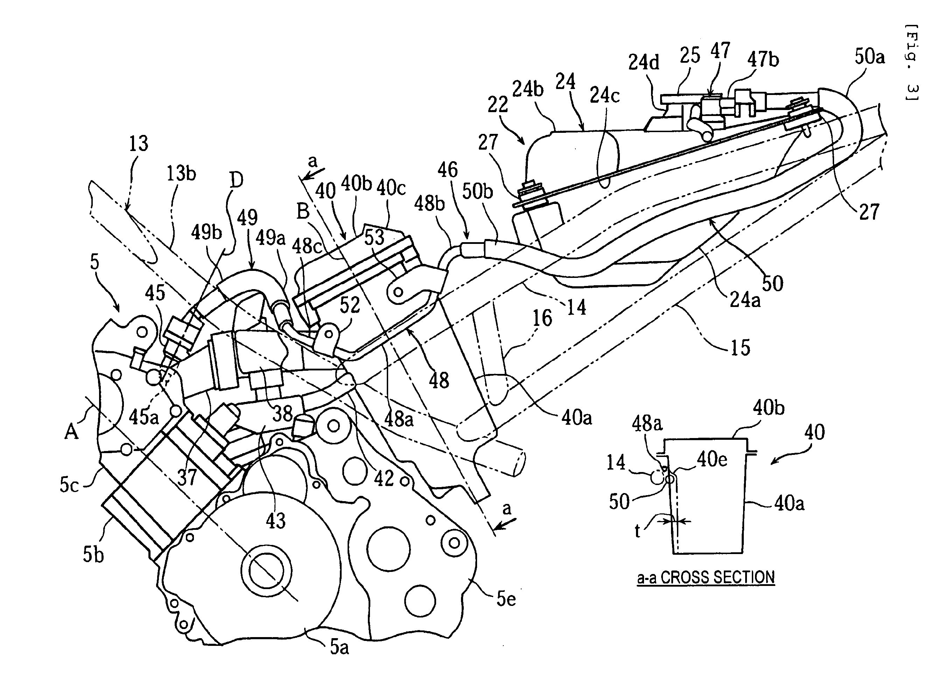

When a relief 40e is formed in the air cleaner body 40a for the close arrangement of the fuel hose 46 as shown in a cross section taken on line a-a of Fig. 3, a dimension of a vehicle width direction of the die cutting direction upstream side portion (lower side portion) from the relief is forced to be decreased by the amount t of the relief 40e and accordingly, the capacity reduces.

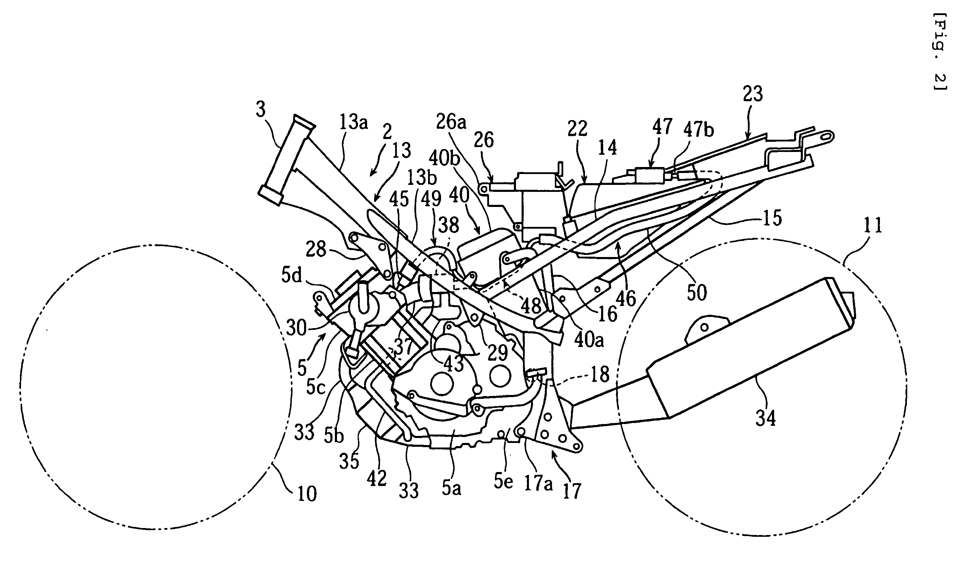

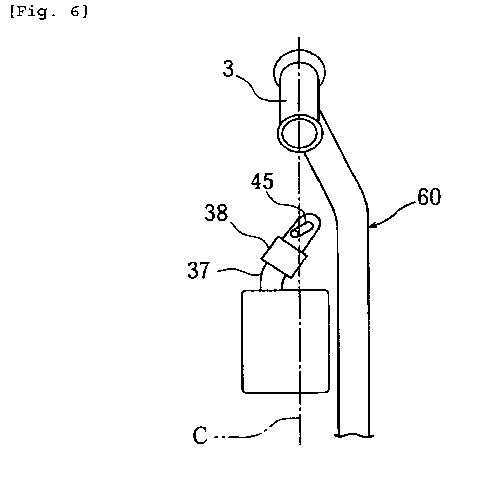

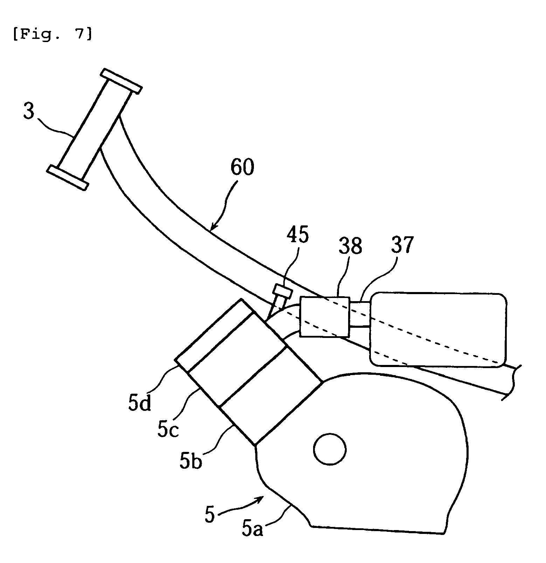

Figs. 6 and 7 are diagrams describing a motorcycle according to a second embodiment. In the diagrams, the same numerals as those of Fig. 2 show the same or corresponding parts.

The motorcycle of the present embodiment is an example in which a frame member 60 connected to a head pipe 3 is arranged so as to be displaced to one side of a vehicle width direction with respect to a vehicle body center line C passing through an axis line of the head pipe 3.

In this frame member 60, a leg shield (panel member) (not shown) for covering the upper side, the left and right sides of the frame member 60 is arranged so as to coincide with the vehicle body center line C.

In the lower side of the frame member 60, an engine 5 is mounted so as to coincide with the vehicle body center line C. An intake tube 37 connected to a cylinder head 5c of the engine 5 extends backward so as to be located in the other side of the vehicle width direction with respect to the vehicle body center line C, and is connected to an air cleaner 40.

Then, an fuel injection valve 45 is arranged so as to be located in the other side of the frame member 60 and be substantially located on the vehicle body center line C when viewed from the above of the vehicle. Also, the fuel injection valve 45 is arranged so as to be located inside space surrounded by the leg shield, a throttle body 38 and the cylinder head 5c and overlap with the frame member 60 when viewed from the side of the vehicle.

In the embodiment, the fuel injection valve 45 is arranged so as to be located in the other side of the frame member 60 arranged so as to be displaced to one side of the vehicle width direction when viewed from the above of the vehicle and is arranged so as to be located inside the space surrounded by the leg shield, the throttle body 38 and the cylinder head 5c and overlap with the frame member 60 when viewed from the side of the vehicle, so that the fuel injection valve 45 can be arranged so as to be oriented to the umbrella back of an intake valve in a region having sufficient space, and an effect substantially similar to that of the embodiment can be obtained.

The description above discloses (amongst others) an embodiment of a motorcycle, in which a stride part for facilitating a stride of a rider at the time of loading and unloading is formed between a seat and a head pipe for supporting a steering shaft, an engine is mounted in a lower portion of a panel member constructing the stride part and an intake passage is connected to a cylinder head coupled to a forward-tilted cylinder of the engine and the intake passage extends backward in the lower side of the panel member and a throttle body into which a throttle valve is built is interposed in the vicinity of an engine connection part of the intake passage and a fuel injection valve is disposed so as to be located inside space surrounded by the throttle body, the cylinder head and the panel member when viewed from the side of the vehicle.

In accordance with a motorcycle according to this preferred embodiment, an intake passage connected to a cylinder head in a forward-tilted state is extended backward in the lower side of a panel member and a fuel injection valve is arranged so as to be located inside space surrounded by a throttle body, the cylinder head and the panel member when viewed from the side of the vehicle, so that the fuel injection valve can be arranged in a region having sufficient space. As a result of that, the fuel injection valve can be arranged so as to be oriented to the umbrella back of an intake valve and thus engine performance can be improved. That is, the panel member constructing a stride part is located higher as the panel member is located in the front side, so that the fuel injection valve can be arranged in empty space between the forward-tilted cylinder head and a front side portion of the panel member. As a result of that, the fuel injection valve can be arranged without heightening an arrangement position of the panel member and the fuel injection valve can be arranged so as to be oriented to the umbrella back of the intake valve while ensuring the loading and unloading capability which is an advantage of the motorcycle comprising the stride part.

The description above further discloses, as a preferred first aspect, a motorcycle in which a stride part for facilitating a stride of a rider at the time of loading and unloading is formed between a seat and a head pipe for supporting a steering shaft, characterized in that an engine is mounted in a lower portion of a panel member constructing the stride part and an intake passage is connected to a cylinder head coupled to a forward-tilted cylinder of said engine and said intake passage extends backward in the lower side of the panel member and a throttle body into which a throttle valve is built is interposed in the vicinity of an engine connection part of said intake passage and a fuel injection valve is disposed so as to be located inside space surrounded by the throttle body, the cylinder head and the panel member when viewed from the side of the vehicle.

Further, according to a preferred second aspect, the motorcycle further comprises a frame member which is connected to the head pipe and extends toward a lower portion of the seat in a backward descending state, characterized in that the panel member is formed so as to cover the upper side, the left and right sides of said frame member and the stride part is in a backward descending state and the fuel injection valve is disposed so as to be located inside space surrounded by the frame member, the throttle body and the cylinder head when viewed from the side of the vehicle.

Further, according to a preferred third aspect, the frame member has left and right side pipes in at least a part between the head pipe and the seat and the fuel injection valve is arranged between the left and right side pipes when viewed from the above of the vehicle.

Further, according to a preferred fourth aspect, the frame member has one main pipe which is connected to the head pipe and extends to a backward oblique lower portion and left and right side pipes which are connected to the back end of said main pipe and extend to a lower portion of the seat while expanding in a vehicle width direction and the fuel injection valve is arranged between the left and right side pipes in the vicinity of a connection part between said side pipes and the main pipe when viewed from the above of the vehicle.

Further, according to a preferred fifth aspect, a fuel supply hose is connected to the fuel injection valve so as to incline to the back of the vehicle with respect to an axis line of said fuel injection valve and said fuel supply hose extends backward in the lower side of the panel member.

Further, according to a preferred sixth aspect, the fuel supply hose has the portion overlapping with the frame member when viewed from the side of the vehicle.

In addition, according to a preferred seventh aspect, the intake passage extends to the back of the vehicle so as to pass between the left and right side pipes.

In addition, according to a preferred eighth aspect, the fuel supply hose connected to the fuel injection valve extends backward over the upper side of the throttle body.

Further, according to a preferred ninth aspect, there is provided a motorcycle further comprising a frame member which is connected to the head pipe and extends to a lower portion of the seat so as to be displaced to one side of a vehicle width direction in a backward descending state, characterized in that the panel member is formed so as to cover the upper side, the left and right sides of said frame member and the fuel injection valve is located in the other side of the frame member when viewed from the above of the vehicle and is located inside space surrounded by the panel member, the throttle body and the cylinder head when viewed from the side of the vehicle.

Further, according to a preferred tenth aspect, the fuel injection valve is disposed so as to overlap with the frame member when viewed from the side of the vehicle.

Likewise, according to a preferred eleventh aspect, there is provided a motorcycle further comprising a secondary air supply system for supplying secondary air to an exhaust system of the engine, characterized in that said secondary air supply system comprises a reed valve opened and closed by pulsation of the exhaust system and a resonator for attenuating a predetermined resonance frequency and said resonator is arranged in the lower side of the throttle body.

Moreover, according to a particularly preferred embodiment, in order to provide a motorcycle capable of arranging a fuel injection valve so as to be oriented to the umbrella back of an intake valve and thus improving engine performance, there is disclosed an engine 5 mounted in a lower portion of a leg shield (panel member) 19c constructing a stride part and an intake passage 37 is connected to a forward-tilted cylinder head 5c of the engine 5 and the intake passage 37 extends backward in the lower side of the leg shield 19c and a throttle body 38 into which a throttle valve is built is interposed in the vicinity of an engine connection part of the intake passage 37 and a fuel injection valve 45 is disposed so as to be located inside space surrounded by the throttle body 38, the cylinder head 5c and the leg shield 19c when viewed from the side of the vehicle.

## Claims

1. Straddle-type vehicle, in particular motorcycle, comprising
a panel member (19c) formed between a head pipe (3) and a seat (7), said panel member (19c) constructs a backward descending stride part,
an engine (5) mounted in a lower portion of the panel member (19c),
an intake passage (37) connected to a cylinder head (5c) of a cylinder (5b) of the engine (5) and extending backwards of the vehicle in the lower side of the panel member (19c), said cylinder (5b) is arranged forwardly-tilted,
a throttle body (38) arranged in a vicinity of an engine connection part of the intake passage (37), and further **characterised in**
a fuel injection valve (45) attached to the downstream end of the intake passage (37) so as to incline in an oblique backward direction, and arranged so that an injection port (45a) is oriented to the umbrella back of an intake valve,
an air cleaner (40) connected to the back end of the intake passage (37), and
a fuel supply hose (46),
wherein said fuel injection valve (45) is arranged inside a space surrounded by the throttle body (38), the cylinder head (5c) and the panel member (19c), when viewed from the side of the vehicle, and
wherein the fuel supply hose (46) is connected to the fuel injection valve (45), is formed to have a generally downward curve so as to stride over an upper portion of the throttle body (38) forward and backward, and is cabled so as to pass through the side of the air cleaner (40).

2. Straddle-type vehicle according to claim 1, **characterized by** a frame member (13), which is connected to the head pipe (3) and extends toward a lower portion of the seat (7) in a backward descending state, wherein the panel member (19c) is formed so as to cover the upper side, the left and right sides of said frame member (13) and the fuel injection valve (45) is disposed so as to be located inside the space surrounded by the frame member (13), the throttle body (38) and the cylinder head (5c) when viewed from the side of the vehicle.

3. Straddle-type vehicle according to claim 2, **characterized in that** the frame member (13) has left and right side pipes (13b) in at least a part between the head pipe (3) and the seat (7) and the fuel injection valve (45) is arranged between the left and right side pipes (13b) when viewed from the above of the vehicle.

4. Straddle-type vehicle according to claim 3, **characterized in that** the frame member (13) has one main pipe (13a), which is connected to the head pipe (3) and extends to a backward oblique lower portion and left and right side pipes (13b), which are connected to the back end of said main pipe (13a) and extend to a lower portion of the seat (7) while expanding in a vehicle width direction and the fuel injection valve (45) is arranged between the left and right side pipes (13b) in the vicinity of a connection part between said side pipes (13b) and the main pipe (13a) when viewed from the above of the vehicle.

5. Straddle-type vehicle according to one of claims 1 to 4 **characterized in that** the fuel supply hose (46) is connected to the fuel injection valve (45) so as to incline to the back of the vehicle with respect to an axis line of said fuel injection valve (45) and said fuel supply hose (46) extends backward in the lower side of the panel member (19c).

6. Straddle-type vehicle according to claim 5, **characterized in that** the fuel supply hose (46) has the portion overlapping with the frame member (13) when viewed from the side of the vehicle.

7. Straddle-type vehicle according to one of the claims 3 to 6, **characterized in that** the intake passage (37) extends to the back of the vehicle so as to pass between the left and right side pipes (13b).

8. Straddle-type vehicle according to one of the claims 1 to 7, **characterized by** a frame member (60) which is connected to the head pipe (3) and extends to a lower portion of the seat (7) so as to be displaced to one side of a vehicle width direction in a backward descending state, wherein the panel member (19c) is formed so as to cover the upper side, the left and right sides of said frame member (60) and the fuel injection valve (45) is located in the other side of the frame member (60) when viewed from the above of the vehicle and is located inside space surrounded by the panel member (19c), the throttle body (28) and the cylinder head (5c) when viewed from the side of the vehicle.

9. Straddle-type vehicle according to claim 8, **characterized in that** the fuel injection valve (45) is disposed so as to overlap with the frame member (60) when viewed from the side of the vehicle.

10. Straddle-type vehicle according to one of the claims 1 to 9, **characterized by** a secondary air supply system for supplying secondary air to an exhaust system of the engine, wherein said secondary air supply system comprises a reed valve opened and closed by pulsation of the exhaust system and a resonator (43) for attenuating a predetermined resonance frequency and said resonator (43) is arranged in the lower side of the throttle body (38).

## Patentansprüche

1. Fahrzeug vom Spreizsitz- Typ, insbesondere ein Motorrad, aufweisend
ein Plattenteil (19c), gebildet zwischen einem Kopfrohr (3) und einem Sitz, wobei das Plattenteil (19c) ein nach hinten abfallendes Schrittteil bildet,
eine Brennkraftmaschine (5), montiert in einem unteren Abschnitt des Plattenteils (19c),
einen Einlasskanal (37), verbunden mit einem Zylinderkopf (5c) eines Zylinders (5b) der Brennkraftmaschine (5) und der sich nach hinten des Fahrzeuges in der unteren Seite des Plattenteils (19c) erstreckt, wobei der Zylinder (5b) nach vorn geneigt angeordnet ist,
einen Drosselkörper (38), angeordnet in einer Nähe eines Brennkraftmaschinen-Verbindungsteils des Einlasskanals (37), und außerdem **gekennzeichnet durch** ein Kraftstoffeinspritzventil (45), verbunden mit dem stromabwärtigen Ende des Einlasskanals (37), um sich in einer schrägen Richtung nach hinten zu neigen, und so angeordnet, dass eine Einspritzungsöffnung (45a) zu dem Schirm hinter einem Einlassventil gerichtet ist,
einen Luftfilter (40), verbunden mit dem hinteren Ende des Einlasskanals (37), und einen Kraftstoffzuführungsschlauch (46),
wobei das Kraftstoffeinspritzventil (45) innerhalb eines Raumes angeordnet ist, umgeben **durch** den Drosselkörper (38), den Zylinderkopf (5c) und das Plattenteil (19c), wenn von der Seite des Fahrzeuges gesehen, und
wobei der Kraftstoffzuführungsschlauch (46), der mit dem Kraftstoffeinspritzventil (45) verbunden ist, gebildet ist, um eine im Wesentlichen abwärtige Krümmung zu haben, um über einen oberen Abschnitt des Drosselkörpers (38) nach vorn und nach hinten zu ragen und kabelförmig ist, um **durch** die Seite des Luftfilters (40) hindurchzugehen.

2. Fahrzeug vom Spreizsitz- Typ nach Anspruch 1, **gekennzeichnet durch** ein Rahmenteil (13), das mit dem Kopfrohr (3) verbunden ist und sich in Richtung eines unteren Abschnittes des Sitzes (7) in einem nach hinten abfallenden Zustand erstreckt, wobei das Plattenteil (19c) gebildet ist, um die Oberseite, die linke und rechte Seite des Rahmenteils (13) abzudecken und das Kraftstoffeinspritzventil (45) angeordnet ist, um innerhalb des Raumes angeordnet zu sein, umgeben durch das Rahmenteil (13), den Drosselkörper (38) und den Zylinderkopf (5c), wenn von der Seite des Fahrzeuges gesehen.

3. Fahrzeug vom Spreizsitz- Typ nach Anspruch 1, **dadurch gekennzeichnet, dass** das Rahmenteil (13) links- und rechtsseitige Seitenrohre (13b) in zumindest einem Teil zwischen dem Kopfrohr (3) und dem Sitz (7) hat und das Kraftstoffeinspritzventil (45) zwischen den links- und rechtsseitigen Seitenrohren (13b) angeordnet ist, wenn von oben auf das Fahrzeuges gesehen.

4. Fahrzeug vom Spreizsitz- Typ nach Anspruch 3, **dadurch gekennzeichnet, dass** das Rahmenteil (13) ein Hauptrohr (13a) hat, das mit dem Kopfrohr (3) verbunden ist und sich zu einem nach hinten geneigten unteren Abschnitt und links- und rechtsseitigen Rohren (13b) erstreckt, die mit einem hinteren Ende des Hauptrohres (13a) verbunden sind und sich zu einem unteren Abschnitt des Sitzes (7) erstrecken, während sie sich in Richtung der Breite des Fahrzeuges erweitern, und das Kraftstoffeinspritzventil (45) zwischen den links- und rechtsseitigen Rohren (13b) in der Nähe eines Verbindungsteils zwischen den Seitenrohren (13b) und dem Hauptrohr (13a) angeordnet ist, wenn von oben auf das Fahrzeuges gesehen.

5. Fahrzeug vom Spreizsitz- Typ nach einem der Ansprüche 1 bis 4, **dadurch gekennzeichnet, dass** der Kraftstoffzuführungsschlauch (46) mit dem Kraftstoffeinspritzventil (45) verbunden ist, um sich nach hinten des Fahrzeuges in Bezug auf eine Achsenlinie des Kraftstoffeinspritzventils (45) zu neigen und sich der Kraftstoffzuführungsschlauch (46) nach hinten in der unteren Seite des Plattenteils (19c) erstreckt.

6. Fahrzeug vom Spreizsitz- Typ nach Anspruch 5, **dadurch gekennzeichnet, dass** der Kraftstoffzuführungsschlauch (46) einen Abschnitt hat, der sich mit dem Rahmenteil (13) überlappt, wenn von der Seite des Fahrzeuges gesehen.

7. Fahrzeug vom Spreizsitz- Typ nach einem der Ansprüche 3 bis 6, **dadurch gekennzeichnet, dass** der sich Einlasskanal (37) nach hinten des Fahrzeuges erstreckt, um zwischen den links- und rechtsseitigen Rohren (13b) hindurchzugehen.

8. Fahrzeug vom Spreizsitz- Typ nach einem der Ansprüche 1 bis 7, **gekennzeichnet durch** ein Rahmenteil (60), das mit dem Kopfrohr (3) verbunden ist und sich zu einem unteren Abschnitt des Sitzes (7) erstreckt, um zu einer Seite der Richtung einer Fahrzeugbreite in einem nach hinten abfallenden Zustand verlagert zu sein, wobei das Plattenteil (19c) gebildet ist, um die Oberseite, die linke und rechte Seite des Rahmenteils (60) abzudecken und das Kraftstoffeinspritzventil (45) in der anderen Seite des Rahmenteils (60) angeordnet ist, wenn von oben auf das Fahrzeug gesehen, und innerhalb des Raumes angeordnet ist, umgeben **durch** das Plattenteil (19c), den Drosselkörper (28) und den Zylinderkopf (5c), wenn von der Seite des Fahrzeuges gesehen.

9. Fahrzeug vom Spreizsitz- Typ nach Anspruch 8, **dadurch gekennzeichnet, dass** das Kraftstoffeinspritzventil (45) angeordnet ist, um mit dem Rahmenteil (60) zu überlappen, wenn von der Seite des Fahrzeuges gesehen.

10. Fahrzeug vom Spreizsitz- Typ nach einem der Ansprüche 1 bis 9, **gekennzeichnet durch** ein Sekundärluft- Zuführungssystem zum Zuführen von Sekundärluft in ein Abgassystem der Brennkraftmaschine, wobei das Sekundärluft- Zuführungssystem ein Klappenventil aufweist, geöffnet oder geschlossen **durch** die Pulsation des Abgassystems, und einen Resonator (43) zum Dämpfen einer vorbestimmten Resonanzfrequenz, und wobei der Resonator (43) in der unteren Seite des Drosselkörpers (38) angeordnet ist.

## Revendications

1. Véhicule du type à enfourcher, en particulier motocycle, comprenant
un élément en forme de panneau (19c) qui est formé entre un tube avant (3) et un siège (7), ledit élément (19c) formant une partie ouverte qui descend vers l'arrière,
un moteur (5) qui est monté dans une partie inférieure de l'élément en forme de panneau (19c),
un passage d'admission (37) qui est relié à une tête (5c) d'un cylindre (5b) du moteur (5) et qui s'étend vers l'arrière du véhicule sur le côté inférieur de l'élément en forme de panneau (19c), ledit cylindre (5b) étant incliné vers l'avant,
un corps d'étranglement (38) qui est disposé près d'une pièce de raccordement de moteur du passage d'admission (37), et également **caractérisé par**
une soupape d'injection de carburant (45) qui est fixée à l'extrémité aval du passage d'admission (37) de manière à être inclinée dans un sens arrière oblique et qui est disposée de telle sorte qu'un orifice d'injection (45a) soit dirigé vers la partie arrière en forme de parapluie d'une soupape d'admission,
un purificateur d'air (40) qui est relié à l'extrémité arrière du passage d'admission (37), et
un tuyau d'alimentation en carburant (46),
étant précisé que la soupape d'injection (45) est disposée dans un espace entouré par le corps d'étranglement (38), la tête de cylindre (5c) et l'élément en forme de panneau (19c), vu du côté du véhicule, et
que le tuyau d'alimentation en carburant (46) est relié à la soupape d'injection de carburant (45), est formée pour définir une courbe globalement vers le bas de manière à passer sur une partie supérieure du corps d'étrangleur (38) vers l'avant et vers l'arrière, et est montée de manière à traverser le côté du purificateur d'air (40).

2. Véhicule du type à enfourcher selon la revendication 1, **caractérisé par** un élément de châssis (13) qui est relié au tube avant (3) et qui s'étend vers une partie inférieure du siège (7), en descendant vers l'arrière, l'élément en forme de panneau (19c) étant formé pour couvrir le côté supérieur et les côtés gauche et droit de l'élément de châssis (13), et la soupape d'injection de carburant (45) étant disposée de manière à se trouver dans l'espace entouré par l'élément de châssis (13), le corps d'étranglement (38) et la tête de cylindre (5c), vu du côté du véhicule.

3. Véhicule du type à enfourcher selon la revendication 2, **caractérisé en ce que** l'élément de châssis (13) a des tubes latéraux gauche et droit (13b) dans une partie au moins située entre le tube avant (3) et le siège (7), et la soupape d'injection de carburant (45) est disposée entre les tubes latéraux gauche et droit (13b), vue du dessus du véhicule.

4. Véhicule du type à enfourcher selon la revendication 3, **caractérisé en ce que** l'élément de châssis (13) a un seul tube principal (13a) qui est relié au tube avant (3) et qui s'étend vers une partie inférieure oblique vers l'arrière, et des tubes latéraux gauche et droit (13b) qui sont reliés à l'extrémité arrière du tube principal (13a) et qui s'étendent vers une partie inférieure du siège (7) tout en s'écartant dans le sens de la largeur du véhicule, et la soupape d'injection de carburant (45) est disposée entre les tubes latéraux gauche et droit (13b) près d'une pièce de liaison entre les tubes latéraux (13b) et le tube principal (13a), vue du dessus du véhicule.

5. Véhicule du type à enfourcher selon l'une des revendications 1 à 4, **caractérisé en ce que** le tuyau d'alimentation en carburant (46) est relié à la soupape d'injection de carburant (45) de manière à être inclinée vers l'arrière du véhicule, par rapport à une ligne axial de ladite soupape d'injection de carburant (45), et le tuyau d'alimentation en carburant (46) s'étend vers l'arrière dans le côté inférieur de l'élément en forme de panneau (19c).

6. Véhicule du type à enfourcher selon la revendication 5, **caractérisé en ce que** le tuyau d'alimentation en carburant (46) a une partie qui recouvre l'élément de châssis (13), vue du côté du véhicule.

7. Véhicule du type à enfourcher selon l'une des revendications 3 à 6, **caractérisé en ce que** le passage d'admission (37) s'étend vers l'arrière du véhicule de manière à passer entre les tubes latéraux gauche et droit (13b).

8. Véhicule du type à enfourcher selon l'une des revendications 1 à 7, **caractérisé par** un élément de châssis (60) qui est relié au tube avant (3) et qui s'étend vers une partie inférieure du siège (7) de manière à être décalé vers un côté de la largeur du véhicule en descendant vers l'arrière, l'élément en forme de panneau (19c) étant formé de manière à couvrir le côté supérieur et les côtés gauche et droit de l'élément de châssis (60), et la soupape d'injection de carburant (45) étant située de l'autre côté de l'élément de châssis (60), vue du dessus du véhicule, et étant située dans un espace entouré par l'élément en forme de panneau (19c), le corps d'étranglement (38) et la tête de cylindre (5c), vue du côté du véhicule.

9. Véhicule du type à enfourcher selon la revendication 8, **caractérisé en ce que** la soupape d'injection de carburant (45) est disposée de manière à recouvrir l'élément de châssis (60), vue du côté du véhicule.

10. Véhicule du type à enfourcher selon l'une des revendications 1 à 9, **caractérisé par** un système d'alimentation en air secondaire pour amener de l'air secondaire dans un système d'échappement du moteur, ledit système d'alimentation en air secondaire comprenant une soupape flexible ouverte et fermée par la pulsation du système d'échappement, et un résonateur (43) pour atténuer une fréquence de résonance prédéterminée, lequel résonateur (43) est disposé sur le côté inférieur du corps d'étranglement (38).
